# EUROPEAN PATENT APPLICATION

(11) **EP 3 606 083 A1**
(43) Date of publication of application: **05.02.2020**
(21) Application number: 18771941.4
(22) Date of filing: 23.03.2018
(51) Int. Cl.: H04N 21/478, H04N 21/254, H04N 21/472, H04N 21/4722, H04N 21/41, H04N 21/414

(54) **REAL TIME SHOPPING METHOD USING VIDEO RECOGNITION IN BROADCAST, AND SMART DEVICE IN WHICH APPLICATION FOR IMPLEMENTING SAME IS INSTALLED**

(30) Priority: 24.03.2017 KR 20170037732
(71) Applicant: Park, Su Bum, Seoul 07919 (KR)
(72) Inventor: Park, Su Bum, Seoul 07919 (KR)
(74) Representative: Viering, Jentschura & Partner mbB Patent- und Rechtsanwälte
(86) International application number: PCT/KR2018/003439
(87) International publication number: WO 2018/174637

(57) **Abstract**

The present invention relates to a real time shopping method using video recognition in a broadcast, and a smart device in which an application for implementing the same is installed, the shopping method comprising: an image extraction step of comparing personal articles or peripheral articles of a model in a video being broadcasted with a sample image, which is the standard, of a sample image storing unit so as to extract the same through a pattern recognition method, or extracting the personal articles or peripheral articles of the model in the video through a feature vector technique of an object recognition method; an image display unit for displaying the extracted image on one side of the video; a shopping mall server searching step of searching a DB of a shopping mall company on the basis of a selected image, when a desired image among the displayed images is selected by a viewer; and a search list display step of displaying the search result on one side of the video.

## Description

### FIELD OF THE INVENTION

The present invention relates to a real-time shopping method by using video recognition on broadcasting and a smart device in which an application for implementing the same is installed; and more particularly to, the real-time shopping method, by using the video recognition on the broadcasting, of: automatically extracting personal belongings or peripheral articles of a model on personal broadcasting displayed in the smart device, searching servers of shopping malls which sell an extracted image selected by a viewer, and allowing shopping at a lowest price, and the smart device in which the application for implementing the same is installed.

### BACKGROUND OF THE INVENTION

In general, a lot of techniques that allow real-time shopping while watching a broadcasting screen have been provided. In particular, home shopping is a method of calling a shopping mall and giving an order while watching a video.

The prior Patent No. 1486545 has proposed an apparatus, a method, and a computer recordable medium of searching a broadcast video by using a TV application for capturing an image from the broadcast video displayed on TV in which the application is installed, such as a smart TV, analyzing whether a QR code is included in the captured image, scanning the QR code if being included therein, and informing a viewer of information on a captured product and on a captured person, respectively, by scanning a text in a search box of the broadcast video or a face thereon.

The prior Patent No. 1436413 has suggested a system and a method of interactive shopping and purchasing by identifying information on a product as a system and a method of recognizing a QR code of an image of a product as an object linked with a broadcast stream with a smart device equipped with a remote controller, a touchscreen, a voice recognition system, a text inputter, and an intelligent shopping agent for recognizing a QR code if a user wants to know information, such as advertising, entertainers' information, vehicles, furniture, clothes worn by entertainers, etc. in a drama, provided from a broadcast stream at a smart device such as a STB-TV, a smartphone, a mobile phone, a tablet PC, or a PDA, making 3D modeling of clothes while the user watches the TV broadcast stream, accessing a shopping mall server, inquiring information on the product linked with the QR code image related to the product as the object linked with the broadcast stream through T-commerce or M-commerce, providing bidirectional shopping information interactively through a return path server, and providing a function of ordering, purchasing, and paying the product.

However, the prior patents which use methods of acquiring information on products or persons by capturing a QR code displayed on a video or a text or a person in a search box in a video had shortcomings including users' inconvenience to watch the video because the QR code and the text on the search box must be included in the video.

The prior Laid-Open Patent No. 2008-0098456 has proposed an advertising service for: detecting and reading an automatic wireless recognition medium attached to an item an advertiser belongs to with an automatic wireless recognition system; collecting, refining, analyzing, and making as information, the read data; selectively drawing the information as advertising contents of a product or service in which advertisees are expected to be interested; and providing the advertisees with more timely and more significant information in a customized form through a screen or an output device.

However, an automatic wireless recognizing apparatus by using radio-frequency identification (RFID), Bluetooth, ZigBee, ultra-wideband (WBB) techniques have been less effective because it must be attached to an item possessed by an advertiser.

### DETAILED EXPLANATION OF THE INVENTION

### TECHNICAL PROBLEM

The present invention has been developed to solve the aforementioned existing problems. It is an object of the present invention to automatically extract and display personal belongings or peripheral articles of a model by using an object recognition technique, a video recognition method, or a pattern recognition technique at a state of not attaching sensors such as QR codes or RFIDs on objects displayed on a video and allowing shopping at a lowest price from a sever of a shopping mall that sells an article selected by a viewer from the extracted articles.

### MEANS OF SOLVING THE PROBLEM

To this end, one example embodiment of the present invention may comprise steps of: extracting images of personal belongings or peripheral articles of a model from a video on broadcasting with a pattern recognition technique by comparing the video with sample images in a sample images-storing unit, which is a standard, or extracting the personal belongings or the peripheral articles of the model from the video with a feature vector method of an object recognition technique; displaying the extracted images on one side of the video; searching shopping mall servers from which databases of shopping malls are searched based on an image desired by a viewer, if being selected, among the displayed images; and displaying a search list in which the searched result is displayed on one side of the video.

Herein, it may further comprise a step of designating an area of interest among the personal belongings or the peripheral articles of the model, and setting the area of interest to allow only images in the designated area of interest to be extracted at the step of extracting the images of the personal belongings or peripheral articles of the model.

Besides, it may also comprise a step of analyzing at least one of pattern, shape, text, or logo by performing image analysis from the extracted images at the step of extracting the images of the personal belongings or peripheral articles of the model, wherein products identical to the extracted images are searched by using the at least one of pattern, shape, text, or logo at the step of searching the shopping mall servers.

Meanwhile, the step of extracting the images of the personal belongings or peripheral articles of the model may work if a video recognition button put on the one side of the video is clicked and a step of displaying a detail page of shopping mall servers which sell a product may be additionally comprised if the product is selected at the step of displaying the search list.

Moreover, it may allow databases of portals to be searched if nothing is found from the databases of the shopping malls at the step of searching shopping mall servers and allow a result of searching the databases of the portals to be displayed at the step of displaying the search list.

In addition, at the step of displaying the search list, it may allow an accessory button to be displayed with the searched image, and allow information on accessories associated with the searched image to be displayed if the accessory button is clicked.

Meanwhile, at the step of displaying the detail page, information relevant to the product searched at the portals may be provided together with the detail page.

Furthermore, at the step of displaying the detail page, information on nearby stores, which sell the product, as the information identified based on location information provided by a smart device that displays the video may be provided together with the detail page.

Another example embodiment of the present invention may provide a smart device in which an application for implementing a real-time shopping method through video recognition on broadcasting is installed.

### EFFECTS OF THE INVENTION

In accordance with the present invention, as personal belongings or background articles of a model appearing on personal broadcasting are extracted in real time and displayed on one side of a screen, a viewer may easily select an article of interest.

In addition, since information on a price, etc. of the article selected by the viewer among the extracted and displayed articles at shopping malls or portals that sell the article is rapidly searched and displayed on a screen, the viewer may shop the article of interest in ascending order from lowest.

### BRIEF DESCRIPTION OF THE DRAWINGS

Fig. 1 is a conceptual diagram illustrating a display unit of a smart device in steps in accordance with one example embodiment of the present invention.
Fig. 2 is a configuration of a whole system which implements a shopping method in accordance with one example embodiment of the present invention.
Fig. 3 is a flowchart that implements a shopping method in accordance with one example embodiment of the present invention.

### DETAILED DESCRIPTION OF THE PREFERRED EMBODIMENTS

Detailed example embodiments to implement the present invention will be explained below by referring to attached drawings.

Upon the explanation of the present invention, terms such as "a first," "a second," etc. may be used to explain a variety of components but the components may not be limited by such terms. The terms are used only for the purpose of distinguishing one component from another one. For example, a first component may be named as a second component without being beyond the scope of the right of the present invention and similarly, even a second component may be named as a first one.

If it is mentioned that a component is connected or linked to another component, it may be understood that the component may be directly connected or linked to the another component but also a third component may exist in between them.

The terms used in this specification are used only to explain specific example embodiments and they are not intended to limit the present invention. Unless a context clearly indicates a different meaning, any reference to singular may include plural ones.

In this specification, it may be understood: that terms such as "include," or "equip" are intended to designate that features, numbers, steps, movements, components, parts, or their combinations exist; and that existence or addibility of one or more other features, numbers, steps, movements, components, parts, or their combinations are not excluded in advance.

Besides, for clearer explanation, shapes, sizes, etc. of elements in drawings may be exaggerated.

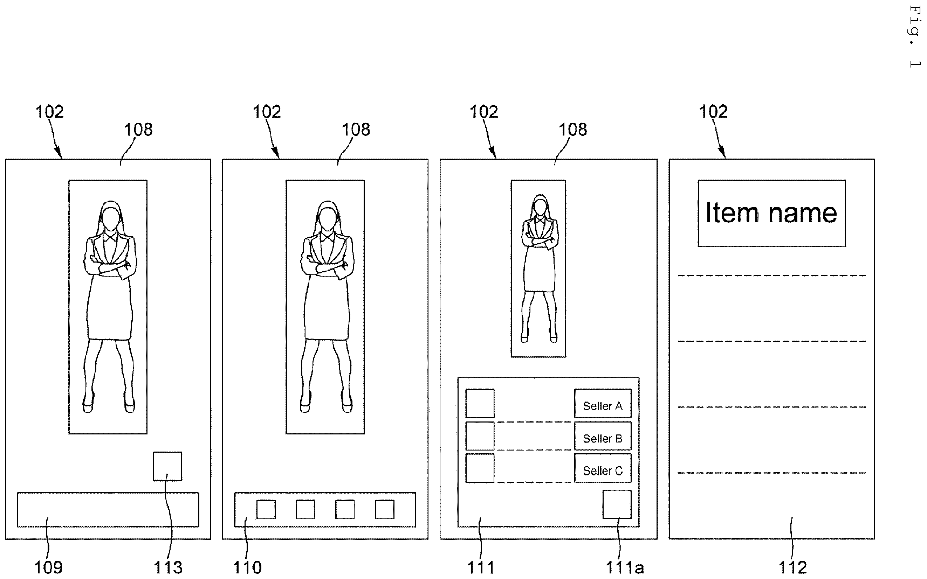

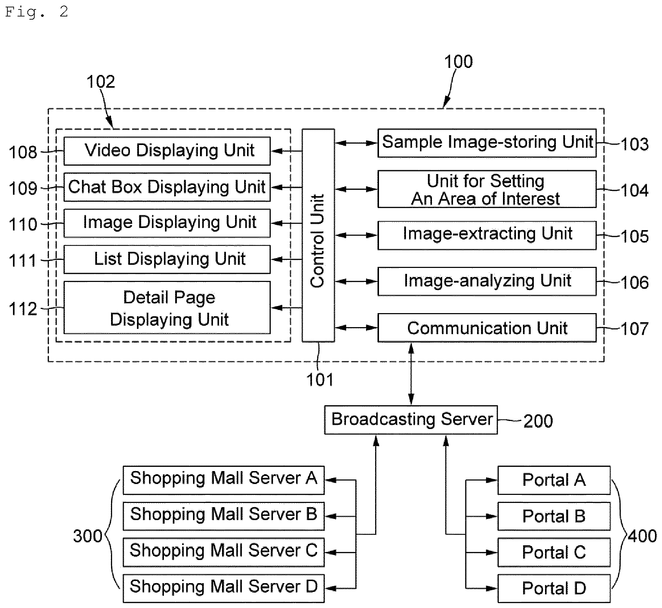

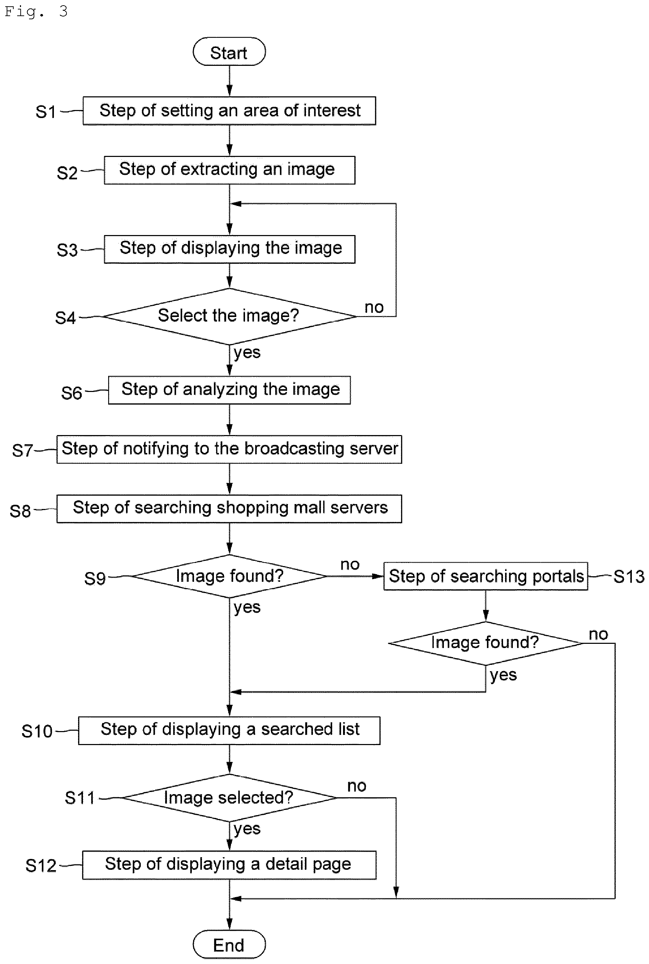

The prevent invention will be explained in details by referring to Figs. 1 to 3. Fig. 1 is a conceptual diagram of a display unit of a smart device in steps in accordance with one example embodiment of the present invention and Fig. 2 is a configuration of a whole system which implements a shopping method in accordance with one example embodiment of the present invention. Besides, Fig. 3 is a flowchart that implements a shopping method in accordance with one example embodiment of the present invention.

One example embodiment of the present invention illustrated in Figs. 1 to 3 is to be applied to personal broadcasting through the Internet wherein an organization that manages personal broadcasting channels is called a multi-channel network (MCN). The MCN was created in the ecosystem of YouTube. It has started as an organization that sets and manages a lot of popular and profits-making channels in YouTube. Configured in alliance with several YouTube channels, the MCN generally offers assistance to content makers in areas such as product, programming, funding, cross-promotion, partner management, digital rights management, monetization/sales, and development of potential audience, etc.

Revenue models of personal broadcasting are mostly made with advertising sponsorships, but banner ads, etc. at the bottom of videos are used. Because such banner ads are made irrelatively to models or peripheral articles appearing on a broadcasting screen, they are difficult to arouse viewers' interest and they do not lead direct purchase, and therefore, their advertising impacts wear out.

The present invention implements a method of (i) allowing a viewer to directly select a personal belonging or peripheral article of a model appearing on a video and do Internet shopping and (ii) distributing revenues to personal broadcasters and shopping mall operators. As videos-watching viewers have interest in models' personal belongings or peripheral articles, it is effective to fulfill desires to purchase.

For this purpose, in one example embodiment of the present invention, a pattern recognition technique is used. Without being limited to this, a method of automatically extracting images of personal belongings or peripheral articles of a model appearing on a video through an object recognition technique or a video recognition technique is, however, available as well.

For example, the U.S. Patent No. US 8,792,732 is a technique for automatically searching and finding an object a viewer wants from a variety of videos uploaded on YouTube or search engines. The U.S.-patented object recognition system is a technique for creating a series of feature vectors that accurately predict the presence of visual objects represented by a given object name by performing rounds of dimensionality reduction and consistency learning on visual content items such as videos and still images.

In accordance with one example embodiment of the present invention, the present invention may be comprised of: a broadcasting server 200 for distributing and keeping an application which implements the shopping method in the present invention to be downloadable at Apple Store or Google Play Store; multiple shopping mall servers 300 or portals 400 for registering their list of articles in the broadcasting server 200 by using an application programming interface (API) method, and responding to search and sales requests; and a smart device 100 of a viewer to which the application is downloadable from the Apple Store or the Play Store, etc. and is runnable while the viewer is watching a broadcast. Herein, the smart device 100 may include a smartphone, a mobile phone, a tablet, a PC, a PDA, a laptop, etc.

In the application, a pattern recognition technique or an object recognition technique is embedded. The pattern recognition as an image processing field is a computer graphic technique applied to a variety of separate secondary fields by converting and processing inputted video or image data. It is a technique of pre-storing information such as images for pattern recognition, and analyzing a feature of inputted information or an inputted image by comparing the stored information with the inputted information, thereby distinguishing the inputted information from the pre-stored information.

In addition to the method of using already made video or image data files, the image processing technique may be also applied to video data inputted in real time through a separate input device such as a camera. Recently, it is used a lot even in areas such as digital video recorder (DVR) intrusion detection for the purpose of guarding and crime prevention and a traffic enforcement system for recognizing part of a license plate of a vehicle which is over-speeding on roads or is illegally parked at a certain area and extracting the vehicle number from its license plate. Lately, thanks to the development of smart phones such as iPhones or Android phones, it has been popular being applied to the fields such as an information-providing service by using an augmented reality technique that mixes separate data by analyzing image patterns of humans and objects.

To implement the pattern recognition technique, the application has a sample images-storing unit 103 where standard images of objects, i.e., product images or only outlined images, are stored. In the sample images-storing unit 103, simple images of a model's personal belongings such as clothes, hats, glasses, watches, bags, and shoes or articles appearing on a background such as furniture, home appliances, and kitchen utensils as consumer products are recorded.

In addition, it is composed of a unit 104 for setting an area of interest that may designate a field of interest among sample images; an image-extracting unit 105 for comparing an image corresponding to a designated sample image and extracting it through the pattern recognition technique or through the feature vector method of the object recognition technique; and an image-analyzing unit 106 for searching a pattern, a shape, a logo, a text, and so forth from the extracted image. The image-extracting unit 105 captures the image like a picture and compares and extracts an object corresponding to a sample image in the captured still image by using the pattern recognition technique.

By using the feature vector method of the object recognition technique, the image-extracting unit 105, meanwhile, may directly extract all objects appearing on the video, or selectively and directly extract only objects corresponding to the articles designated by the unit 104 for setting an area of interest from the video.

More desirably, it is advantageous to extract an object from the captured image corresponding to the sample image because it may simplify the application.

The image-analyzing unit 106 analyzes the pattern, the shape, the text, and the logo, and so forth included in the image by performing the analysis of the extracted image.

On the other hand, the application may display a square-shaped video recognition button 113 that may be touched on one side of a video displaying unit 108 which is being streamed on a screen 102 equipped in the smart device 100 of a user.

Separate from the video displaying unit 108, flow of a chat box displaying unit 109, an image displaying unit 110, a list displaying unit 111, and a detail page displaying unit 112 are controlled by a control unit 101 to appear in consecutive order on one side of the screen 102.

The chat box displaying unit 109 allows a text string in one or two lines to be recorded on the bottom of the video displaying unit 108 and the image displaying unit 110 allows the images of the extracted objects, e.g., personal belongings or background articles, to be displayed from the image-extracting unit 105 by individual types on the bottom of the video displaying unit 108. At the time, while the image displaying unit 110 is allowed to be displayed on the screen 102, the chat box displaying unit 109 may be allowed to be hidden.

If an image optimized through the image-analyzing unit 106 is searched from the shopping mall servers 300, the list displaying unit 111 may allow the shopping mall servers 300 to be displayed on the screen 102 in ascending order from lowest to highest price. At the time, the video displaying unit 108 may be continuously displayed at a small screen, or disappear.

Moreover, on the bottom of the list displaying unit 111, an accessory button 111A may be equipped. When the accessory button 111A is pressed, information on accessories such as a hat, a necklace, shoes, a belt, and a scarf that coordinate well with the searched personal belongings may be allowed to be displayed as separate items. The information on the accessories may be allowed to be displayed on the bottom of the list displaying unit 111 in a form of text or image. At the time, the information on the accessories may be displayed on the bottom of the list displaying unit 111 in a form of text or image and may be different depending on types of personal belongings or peripheral articles. In addition, when the information on the accessories is selected, such accessories may be allowed to be shopped together.

The detail page displaying unit 112 may be allowed to display detailed information on a product at the website of a shopping mall server 300 selected from the list displaying unit 111 and at this time, the video displaying unit 108 may be allowed to disappear from the screen.

News relevant to the product searched at the portal in accordance with an embodiment of the present invention may be provided together with the detailed information on the product at the detail page displaying unit 112.

Furthermore, information on nearby stores for selling the product in accordance with an embodiment of the present invention may be also provided to the detail page displaying unit 112 based on information on a location provided by the smart device 100.

Meanwhile, the smart device 100 may be composed of a control unit 101 for running an application, a communication unit 107 for communicating wirelessly with a broadcasting server 200, and a screen 102 for displaying a video.

Explanation below on a real-time shopping method will be made through video recognition on broadcasting in accordance with the present invention by referring to Fig. 3. Fig. 3 is a flowchart for implementing a shopping method in accordance with one example embodiment of the present invention.

The shopping method in accordance with one example embodiment of the present invention is conducted as follows:
First, a video recognition button 113 placed on one side of a video displaying unit 108 is to operate an application to recognize personal belongings or peripheral articles of a model. When the button 113 is checked by a viewer, a unit 104 for setting an area of interest works. The unit 104 for setting an area of interest sets the personal belongings or the peripheral articles at a step of S1. To set the personal belongings or the peripheral articles, a list of the personal belongings or the peripheral articles is displayed on the screen 102 in a form of text and at the time, it is desirable to make translucent letters appear on one side of the video displaying unit 108. When all objects appearing on a video are extracted with a pattern recognition technique, too much time may be spent. To exclude unnecessary objects, the unit 104 for setting an area of interest may be used.

In accordance with an embodiment of the present invention, the personal belongings or the peripheral articles may be also pre-designated as an area of interest before the video is watched. When the video recognition button 113 is checked, the unit 104 for setting an area of interest may be omitted and the image-extracting unit 105 may be operated.

In accordance with an embodiment of the present invention, when the video recognition button 113 is checked, all objects appearing on a video may be extracted from the image-extracting unit 105. In other words, the image-extracting unit 105 that has an object recognition system may extract all objects appearing on the video irrelevantly from the unit 104 for setting an area of interest at a step of S2.

After the area of interest is set at the previous step, the image-extracting unit 105 compares the personal belongings or peripheral articles of the model appearing on the video with sample images recorded in the sample images-storing unit 103 by using the pattern recognition technique at the step of S2. If the personal belongings have been designated, clothes, a hat, shoes, a bag, etc. of the model are compared with the sample images and then extracted. At the time, to increase extraction accuracy, the video may be captured and then be compared with the designated sample images.

The images extracted from the image-extracting unit 105 are displayed at the image displaying unit 110 at a step of S3. When a specific image is selected by the viewer among the images appearing at the image displaying unit 110 at a step of S4, an analysis of the selected image is performed by the image-analyzing unit 106 to analyze a pattern, a shape, a text, a logo, and so forth at a step of S6.

Information on the pattern, the shape, the text, the logo, and so forth of the analyzed image at S6 is notified to the broadcasting server 200 through a communication unit 107 at a step of S7.

A broadcasting server 200 searches databases of shopping mall servers 300 to find a product identical to the information on the specific image at a step of S8.

If it is not found from the shopping mall servers 300, databases of portals 400 are searched at a step of S13.

When the product identical to the specific image is found at the shopping mall servers 300 or the portals 400, a list of sellers is displayed in a list displaying unit 111 at a step of S10.

After that, when the viewer searches a seller in the list based on the lowest price or selects a desired seller and then clicks the seller, detailed information on the product identical to the specific image is displayed at the detail page displaying unit 112 at a step of S12.

In accordance with an embodiment of the present invention, as explained above, the viewer may click an accessory button 111A equipped on the bottom of the list displaying unit 111 and then information on accessories, e.g., a hot, a necklace, shoes, a belt, and a scarf, that coordinates with the searched personal belongings or the searched peripheral articles may be allowed to be displayed as separate items. Herein, the information on the accessories may be displayed on the bottom of the list displaying unit 111 in a form of text or image and be different depending on types of the personal belongings or the peripheral articles. Besides, it may be set to allow the accessories to be shopped together when the information on the accessories is selected.

In accordance with an embodiment of the present invention, as explained above, together with the detailed information on the product at the detail page displaying unit 112, relevant news regarding the product found from the portals 400, moreover, may be provided and information on nearby stores for selling the product may be also provided to the detail page displaying unit 112 based on information on a location provided by the smart device 100.

As explained above, in accordance with the present invention, as personal belongings or background articles of a model appearing on personal broadcasting are extracted in real time and displayed on one side of a screen, a viewer may easily select an article of interest and also as information on a price, etc. of the article selected by the viewer among the extracted and displayed articles at shopping malls or portals that sell the article is rapidly searched and displayed on a screen, the viewer may shop the article of interest in ascending order from lowest.

It must be noted that the aforementioned example embodiment is for the explanation but not for the limitation. Besides, a person skilled in the art to which the present invention pertains could understand a variety of example embodiments within the technical scope of the present invention.

### * Reference Numerals

- 100:: A smart device
- 101:: A control unit
- 102:: A screen
- 103:: A sample images-storing unit
- 104:: A unit for setting an area of interest
- 105:: An image-extracting unit
- 106:: An image-analyzing unit
- 107:: A communication unit
- 108:: A video displaying unit
- 109:: A chat box displaying unit
- 110:: An image displaying unit
- 111:: A list displaying unit
- 112:: A detail page displaying unit
- 113:: A video recognition button
- 200:: A broadcasting server
- 300:: Shopping mall servers
- 400:: Portals

### Industrial Availability

The present invention which relates to a real-time shopping method through video recognition on broadcasting is available in a field of e-commerce, including online shopping, etc.

## Claims

1. A real-time shopping method through video recognition on broadcasting, comprising steps of:
extracting images of personal belongings or peripheral articles of a model from a video on broadcasting with a pattern recognition technique by comparing the video with sample images in a sample images-storing unit, which is a standard, or extracting the personal belongings or the peripheral articles of the model from the video with a feature vector method of an object recognition technique;
displaying the extracted images on one side of the video;
searching shopping mall servers from which databases of shopping malls are searched based on an image desired by a viewer, if being selected, among the displayed images; and
displaying a search list in which the searched result is displayed on one side of the video.

2. The method of Claim 1, further comprising a step of designating an area of interest among the personal belongings or the peripheral articles of the model, and setting the area of interest to allow only images in the designated area of interest to be extracted at the step of extracting the images of the personal belongings or peripheral articles of the model.

3. The method of Claim 1, also comprising a step of analyzing at least one of pattern, shape, text, or logo by performing image analysis from the extracted images at the step of extracting the images of the personal belongings or peripheral articles of the model;
wherein products identical to the extracted images are searched by using the at least one of pattern, shape, text, or logo at the step of searching the shopping mall servers.

4. The method of Claim 1, wherein the step of extracting the images of the personal belongings or peripheral articles of the model works if a video recognition button put on the one side of the video is clicked;
additionally comprising a step of displaying a detail page of shopping mall servers which sell a product if being selected at the step of displaying the search list.

5. The method of Claim 1, wherein, if nothing is found from the databases of the shopping malls at the step of searching shopping mall servers, databases of portals are searched and a result of searching the databases of the portals is displayed at the step of displaying the search list.

6. The method of Claim 1, wherein, at the step of displaying the search list, an accessory button is displayed with the searched image and if the accessory button is clicked, information on accessories associated with the searched image is displayed.

7. The method of Claim 4, wherein, at the step of displaying the detail page, information relevant to the product searched at the portals is provided together with the detail page.

8. The method of Claim 4, wherein, at the step of displaying the detail page, information on nearby stores, which sell the product, identified based on location information provided by a smart device that displays the video is provided together with the detail page.

9. A smart device in which an application for implementing a real-time shopping method through video recognition on broadcasting in one of Claims 1 to 8 is installed.
